# EUROPEAN PATENT APPLICATION

(11) **EP 3 827 715 A1**
(43) Date of publication of application: **02.06.2021**
(21) Application number: 20206573.6
(22) Date of filing: 10.11.2020
(51) Int. Cl.: A47J 31/52

(54) **DISPENSING UNIT FOR AN ESPRESSO COFFEE MACHINE**

(30) Priority: 29.11.2019 IT 201900022449
(71) Applicant: Quick Mill S.r.l., 20030 Senago (MI) (IT)
(72) Inventor: CHINAGLIA, Maurizio, 20030 SENAGO (MI) (IT)
(74) Representative: Frasson, Luca

(57) **Abstract**

The present invention relates to a dispensing unit (1) for an espresso coffee machine, comprising:
- a coupling body (3) adapted to allow the coupling of a filter holder comprising a filter containing a dose of powdered coffee, said coupling body (3) being hydraulically connectable to a hot water source to allow said hot water to come into contact with said dose of powdered coffee;
- an automatic control unit (4) adapted to operate a pump configured to pump said hot water from said hot water source to said coupling body (3).

According to the invention, the dispensing unit (1) comprises:
- a regulating valve (5) of the pressure and the flow rate configured to intercept the flow of said hot water destined to reach said dose of powdered coffee;
- an activation device (9) configured to send an electric activation signal for activating said automatic control unit (4) so that said automatic control unit (4) actuates said pump;
- a lever (7) associated with said regulating valve (5) and with said activation device (9), said lever (7) being movable between a closed position in which said regulating valve (5) is closed, and at least one opening position in which said regulating valve (5) is at least partially open, the degree of opening of said regulating valve (5) depends on the position of said lever (7), said activation device (9) being activable to send said electric activation signal for activating said automatic control unit (4).

## Description

The present invention refers to a dispensing unit for an espresso coffee machine and to an espresso coffee machine comprising such a dispensing unit.

In general, espresso coffee machines have a machine body in which a boiler adapted to producing hot water and a pump adapted to conveying hot water to a dispensing unit located in the external part o" the machine are enclosed. The dispensing unit generally comprises a coupling body, or ring, to which the bar tender couples a filter holder in which a filter containing a dose of powdered coffee is housed. The delivery of espresso coffee provides for the activation of the pump, which pumps the hot water of the boiler towards the coupling body where the filter holder with the dose of powdered coffee is present and where the pre-infusion and the forced percolation of water takes place, at high pressure, through the dose of powdered coffee.

As is known, there are various types of espresso coffee machines. One of the first espresso coffee machines launched on the market was the "E61" machine produced by FAEMA starting from 1961.This machine has a dispensing unit comprising a manual control unit which has a lever that can be operated by the bar tender to activate the pump and to start the process for dispensing espresso coffee. Once the desired quantity of coffee has been obtained, the lever is returned to its initial position to deactivate the pump and stop dispensing espresso coffee. At this point, the discharge of residues and excess pressure is also carried out.

Such a dispensing unit with manual control is also described in patent US3230974 filed in 1961.In the coffee machine sector, the dispensing units with manual control are also more simply known as "manual E61 units" or "traditional E61 units", starting from the name of the model "E61" of the FAEMA's espresso coffee machine.

The "manual E61 units" then evolved into the so-called "automatic E61 units" in which, in essence, the pump activation lever is replaced by an electronic control unit that receives information from a push-button panel or from a graphic interface present on the body of the machine. Through said push-button panel or graphic interface it is also possible to pre-set some parameters for dispensing espresso coffee, such as for example the duration of delivery and the temperature of the hot water. Once the pre-set quantity of espresso coffee has been dispensed, the pump switches off and the solenoid valve in the automatic E61 unit de-energizes to discharge excess residues and pressures. Generally, it is possible to stop dispensing coffee even earlier than planned, by means of a special stop button.

In both dispensing units, either with manual or automatic control, described above, the flow rate and the pressure of the hot water are substantially constant, in the sense that they depend respectively on the section of the orifice of the gigleur and on the operating pressure of the pump, which, in the case of espresso coffee machines, is generally set at a value of about 9 bar.

In the espresso coffee machines of the known type described above it is therefore not possible to vary the pressure (and the flow rate) of the hot water reaching the coffee dose, in particular before and during the same delivery of the espresso coffee.

Also thanks to the increasing diffusion of new types of powdered coffee blends, the need is increasingly felt to be able to vary the pressure (and the flow rate) of the hot water reaching and passing through the dose of powdered coffee, to obtain espresso coffee with desired organoleptic properties, so as to be able to adapt the coffee dispensing parameters to the requirements of the particular types of existing coffee blends.

Furthermore, in the espresso coffee machines of the known type it is not possible to regulate or vary the pre-infusion of the dose of powdered coffee.

The main task of the present invention is to realise a dispensing unit for espresso coffee machines which solves the technical problem described above, allowing to regulate the pressure and the flow rate of the hot water that passes through the dose of coffee so as to obtain espresso coffee.

Within the scope of this task, an object of the present invention is to realise a dispensing unit which also allows to regulate the pre-infusion of the powdered coffee dose to be regulated.

Another object of the invention is to realise a dispensing unit which is simple and intuitive to use.

Another object of the invention is to realise a dispensing unit which is compatible with various espresso coffee machines.

Another object of the invention consists of realising a dispensing unit that is easy to make and is economically competitive when compared with the known technique.

The above-mentioned task, as well as others which will more fully emerge in the following, are attained by a dispensing unit for an espresso coffee machine as recited in claim 1. The above-mentioned task, as well as others set down, are also attained by an espresso coffee machine as recited in claim 8 and by the related process for dispensing espresso coffee as recited in claim 10.

Other features are envisaged in the dependent claims.

Further features and advantages shall be more apparent from the description of a preferred, but not exclusive, embodiment of a dispensing unit for espresso coffee machines, illustrated by mere way of non-limiting example with the aid of the accompanying drawings, in which:

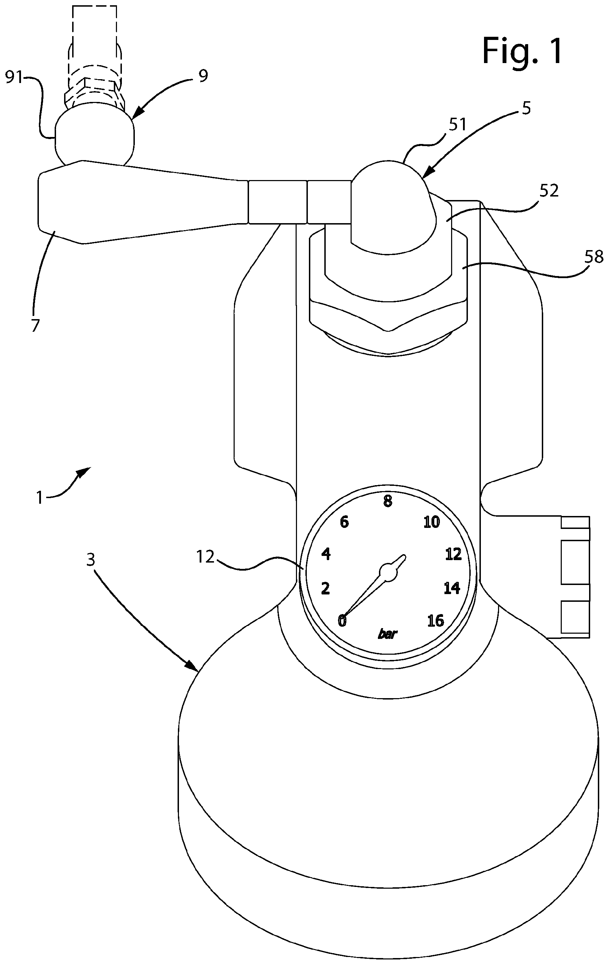

Figure 1 is a perspective view from the front of a first embodiment of a dispensing unit, according to the invention;

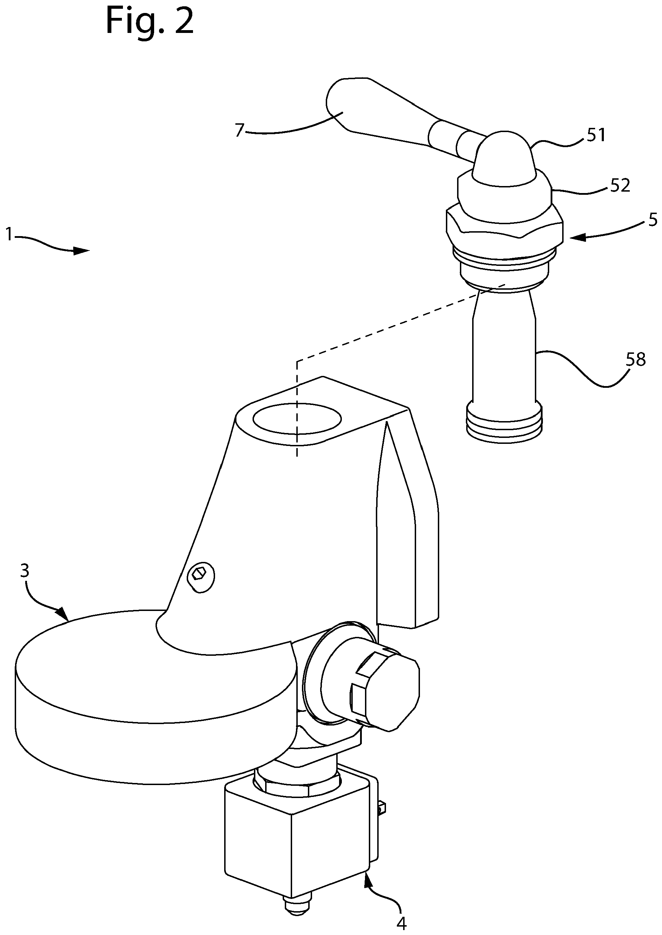

Figure 2 is a semi-exploded perspective view of the dispensing unit of Figure 1, according to the invention;

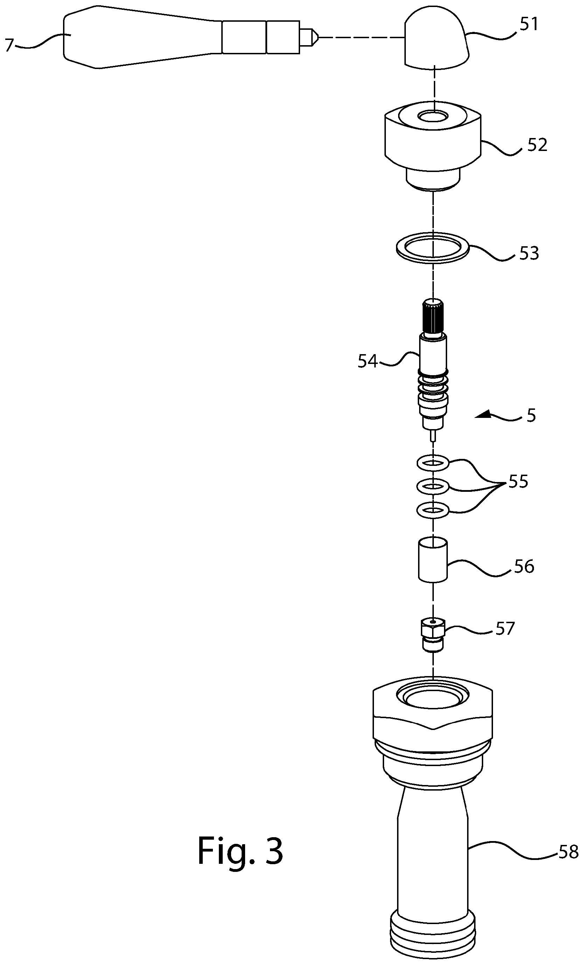

Figure 3 is an exploded view of the regulating valve of the dispensing unit of Figure 1, according to the invention;
Figures 4 and 5 are perspective views of the dispensing unit of Figure 1, applied to a wall of an espresso coffee machine, illustrated respectively in a closed position of the relative lever and in a maximum opening position of the relative lever;
Figures 6 and 7 are perspective views of a second embodiment of the dispensing unit, according to the invention, applied to a wall of an espresso coffee machine, illustrated respectively in a closed position of the relative lever and in a maximum opening position of the relative lever;
Figure 8 is a top plan view of the regulating valve, including the lever in the closed position;
Figure 9 is a sectional view of the regulating valve represented in figure 8 taken along the axis IX-IX;
Figure 10 is a detailed view of the portion indicated by X of the regulating valve represented in Figure 9;
Figure 11 is a top plan view of the regulating valve, including the lever in the maximum opening position;
Figure 12 is a sectional view of the regulating valve represented in figure 11 taken along the axis XII-XII;
Figure 13 is a detailed view of the portion indicated by XIII of the regulating valve represented in Figure 12.

With reference to the aforementioned figures, the dispensing unit for an espresso coffee machine, indicated as a whole with the reference number 1, comprises:
- a coupling body 3 adapted to allow the coupling of a filter holder, not illustrated, comprising in turn a filter containing a dose of powdered coffee, said coupling body 3 being hydraulically connectable to a hot water source to allow the hot water to come into contact with said dose of powdered coffee;
- an automatic control unit 4 adapted to operate a pump configured to pump the hot water from the hot water source to the coupling body 3.

According to the invention, the dispensing unit 1 comprises:
- a regulating valve 5 of the pressure and the flow rate configured to intercept the flow of hot water destined to reach the dose of powdered coffee;
- an activation device 9 configured to send an electric activation signal for activating the automatic control unit 4 so that said automatic control unit 4 actuates the aforesaid pump;
- a lever 7 adapted to activate the regulating valve 5 and associated with the activation device 9.

This lever 7 is movable between a closed position in which the regulating valve 5 is closed, and at least one opening position in which the regulating valve 5 is at least partially open, the degree of opening of the dispensing valve 5 depends on the position of the lever 7. The activation device 9 associated with the lever 7 is activable to send the electric activation signal for activating said automatic control unit 4 so that the automatic control unit 4 starts the operation of the aforesaid pump.

In particular, the activation device 9 is associated with the lever 7 so that in the closed position of the lever 7, the activation device 9 is inactive while in the open position of the lever 7 it is active.

In the closed position of the lever 7, the regulating valve 5 is closed and does not allow the passage of hot water. At the same time, in the closed position of the lever 7, the pump is not activated by the automatic control unit 4.

Advantageously, the regulating valve 5 is placed in the dispensing unit 1 hydraulically upstream of the zone of the coupling body 3 used to accommodate the filter holder containing the filter and the dose of powdered coffee. Advantageously, the lever 7 is movable between the closed position and a maximum opening position in which the regulating valve 5 is completely open. In said maximum opening position, the pressure of the hot water which reaches the dose of powdered coffee is determined by the operating pressure value imposed by the pump itself. In said maximum opening position the flow rate of the hot water that reaches the dose of powdered coffee is determined by the area of the section of the orifice of the gigleur 57 present in the regulating valve 5.

Therefore, the maximum flow rate value is determined by the section of the orifice of the gigleur 57 and the maximum pressure value is given by the intrinsic characteristics of the pump.

Advantageously, in the positions of the lever 7 that are intermediate between the closed position and the maximum opening position, the pressure of the hot water which reaches the coffee dose can be regulated to values lower than the operating pressure value imposed by the pump itself.

In this way it is also possible to regulate the pre-infusion of the dose of powdered coffee as desired, thus being able to make the most of any type of coffee and roasting, and enhancing the aromas and taste of the coffee in the cup.

At the same time, the flow rate of the hot water that reaches the dose of powdered coffee can also be reduced and regulated at will.

The pressure and the flow rate can be progressively regulated from a zero value to a maximum value, by acting on the lever 7.

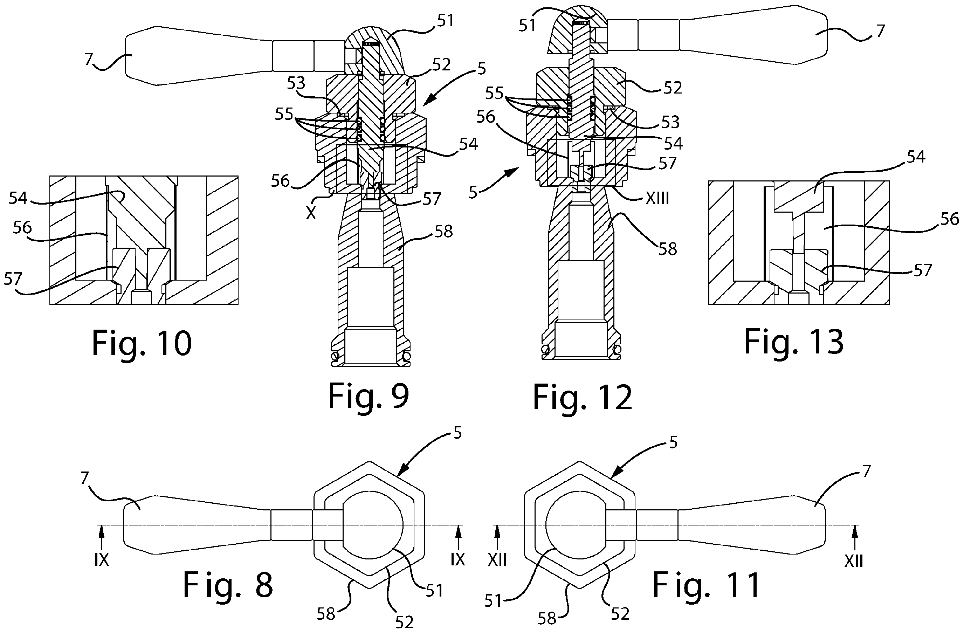

As illustrated for example in Figures 8 to 10, when the lever 7 is in the closed position, the regulating valve 5 is completely closed, while in the maximum opening position of the lever 7, illustrated in Figures 11 to 13, the regulating valve 5 is completely open.

That is, it allows the bar tender to select a pressure value from a wide choice of possible pressures for dispensing coffee and also to easily vary the pressure during a single coffee dispensing simply by varying the opening and/or closing of the lever 7, to which opening/closing movement, as better explained below, a direct opening and/or closing action of the regulating valve 5 corresponds.

Basically, as also illustrated in the accompanying figures, the bar tender, by manually acting directly on the lever 7, can regulate the degree of opening of the regulating valve 5 and thus obtain a profiling of the infusion pressure of the dose of coffee in the filter and of delivery of the coffee in the cup.

Advantageously, the dispensing unit 1 comprises a pressure gauge 12 able to detect and show the pressure of the hot water in contact with the dose of powdered coffee, so that the bar tender is allowed to know the exact pressure value and to be able to vary it if necessary, by always acting on the lever 7 only.

Advantageously, in accordance with what is described in the introductory part, the automatic control unit 4 can be a so-called "automatic E61 unit".

Advantageously, the dispensing unit 1 is configured to be fixed to a wall 11 of an espresso coffee machine, the activation device 9 being also associated with said wall 11 so as to face the lever 7 when the lever 7 is in the closed position.

In this case, when the lever 7 is in the closed position, it faces and interacts with the activation device 9 associated with the wall 11 of the espresso coffee machine. In particular, when the lever 7 is in the closed position, hence it is in contact with or near the activation device 9, the latter remains inactive; the automatic control unit 4 does not receive any electric activation signal, therefore the pump remains off.

When, on the other hand, the lever 7 is moved away from the activation device 9, the latter is configured to be activated and send the electric signal for activating the automatic control unit 4 which in turn activates the pump. The activation device 9 is configured to send said electric signal, and therefore to keep the pump active, until the lever 7 returns to the closed position, that is, near or in contact with the activation device 9.

Advantageously, the lever 7 in the closed position, in which it is near or in contact with the activation device 9, requires a certain force to be opened, in order to avoid undesired activations of the activation device 9 itself.

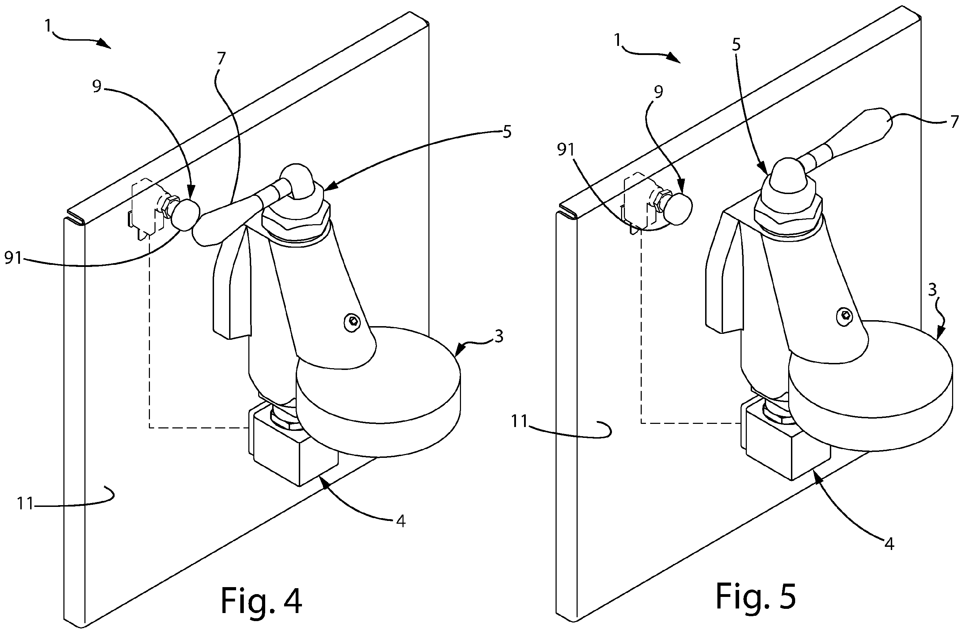

In a first embodiment of the dispensing unit 1, such as the one illustrated in Figures 4 and 5, respectively in a closed position and in a maximum opening position of the lever 7, the activation device 9 comprises a switch 91 electrically connected to the automatic control unit 4.

Advantageously, in the closed position, the lever 7 keeps the switch 91 pressed and only in the passage of the lever 7 from the closed position to an open position, the lever 7 releases the pressure exerted on the switch 91, activating it to allow sending the electric activation signal to the automatic control unit 4, which then activates the pump.

For example, the switch 91 can be open, that is to say, interrupt the passage of electric current, when it is pressed by the lever 7, and closed when the lever 7 does not exert any pressure on the switch 91 itself.

Advantageously, the lever 7 in the closed position, in which it is engaged with the switch 91, requires a certain force to be opened, in order to avoid undesired activations of the activation device 9 itself. As soon as the lever 7 changes position, the switch 91 trips, is closed, and sends the electric activation signal to the automatic control unit 4.The switch 91 remains closed until the lever 7 returns to the closed position.

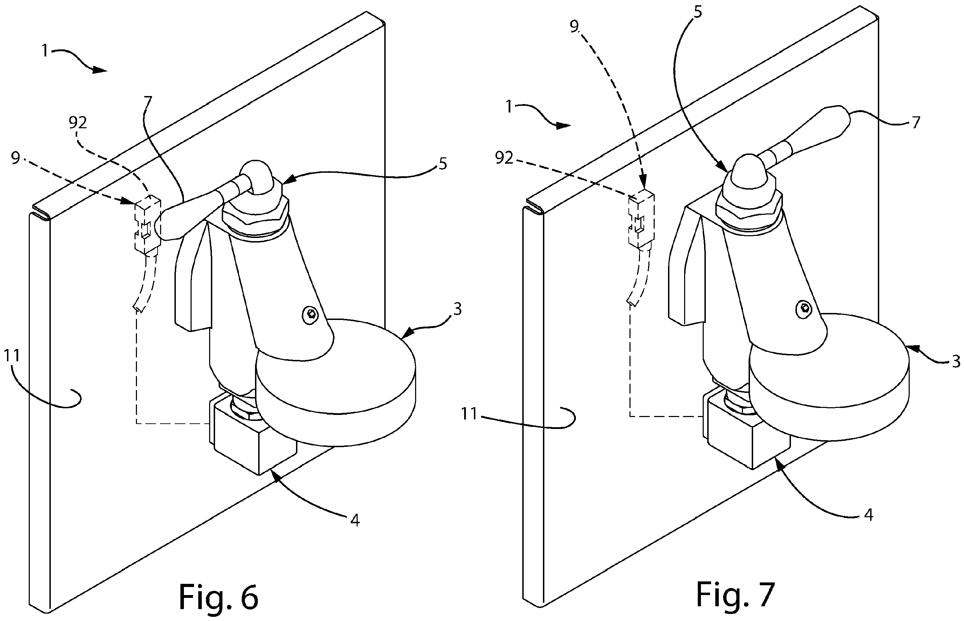

In a second embodiment of the dispensing unit 1, such as the one illustrated in Figures 6 and 7, respectively in the closed and in the open position of the lever 7, the activation device 9 comprises a sensor 92 able to detect the passage of the lever 7 from the closed position to an open position for sending the electric activation signal for activating said automatic control unit 4.

The sensor 92 can advantageously be a magnetic and/or electromagnetic sensor, able to detect the presence of the lever 7 or one of its magnetic and/or electromagnetic components.

Alternatively, the sensor 92 can be an optical and/or laser sensor able to detect the presence of the lever 7.

As illustrated in the accompanying figures, the regulating valve 5 is advantageously a needle regulating valve which can be operated, as explained below, by the lever 7.

The regulating valve 5 comprises a valve body 58 comprising inside it a gigleur 57, or injector, a filter 56, one or more o-rings 55 to guarantee the sealing and prevent any rotation of the components of the valve 5 by friction, a rod 54 provided at the lower end with a regulating needle whose axial movement inside the gigleur 57 allows regulating the pressure and the flow rate of the flow of hot water intercepted by the valve 5 itself. The valve 5 further comprises one or more gaskets 53 to ensure the sealing of the cap 52 of the valve body 58.The lever 7 engages on the upper end of the knurled rod 54 by means of a body 51 integral with the lever 7 itself.

The rotation of the lever 7 involves the rotation of the body 51, which by dragging the rod 54 into rotation also causes an axial displacement thereof which leads to the movement of the needle inside the gigleur 57.

The present invention also relates to an espresso coffee machine comprising a dispensing unit 1 as described above.

In particular, the present invention also relates to an espresso coffee machine comprising a hot water source, such as for example a boiler, a dispensing unit 1 and a pump configured to pump hot water from the hot water source to the dispensing unit 1.

The dispensing unit 1 comprises:
- a coupling body 3 adapted to allow the coupling of a filter holder comprising a filter containing a dose of powdered coffee. The coupling body 3 is hydraulically connected to the hot water source to allow the hot water to come into contact with the dose of powdered coffee,
- an automatic control unit 4 adapted to operate the pump to pump hot water from the hot water source to the coupling body 3 of the dispensing unit 1.

According to the invention, the dispensing unit 1 comprises:
- a regulating valve 5 of the pressure and the flow rate configured to intercept the flow of hot water destined to reach the dose of powdered coffee;
- an activation device 9 configured to send an electric activation signal for activating the automatic control unit 4 so that said automatic control unit 4 actuates the pump;
- a lever 7 adapted to activate the regulating valve 5 and is movable between a closed position in which the regulating valve 5 is closed, and at least one opening position in which the regulating valve 5 is at least partially open, the degree of opening of the dispensing valve 5 depends on the position of the lever 7.

The activation device 9 is associated with the lever 7 and is activable to send the electric activation signal for activating said automatic control unit 4 to operate the pump.

The present invention also relates to a process for dispensing espresso coffee comprising the steps of:
- having an espresso coffee machine as described above;
- gripping the lever 7;
- activating the activation device 9;
- moving the lever 7 from the closed position to at least one open position to select the degree of opening of the regulating valve 7.

Advantageously, as soon as the lever 7 is moved from the closed position, the pump is activated and, as the lever 7 is further rotated, the regulating valve 5 increases its opening.

The operation of the dispensing unit 1, as well as of the relative espresso coffee machine is clear and evident from what has been described.

In practice it has been found that the dispensing unit 1, according to the present invention, achieves the intended task and objects since it allows the pressure and the flow rate of the hot water which comes into contact with the dose of powdered coffee to be regulated.

An advantage of the invention therefore consists in also being able to regulate the pre-infusion of the dose of powdered coffee, in terms of pressure and flow rate of hot water, according to the type of blend and roasting of the powdered coffee.

Another advantage of the invention consists in the fact that the aforesaid pressure can be displayed, so as to be able to vary its value as desired even during the single delivery of a cup of espresso coffee.

Still another advantage consists in the fact that the dispensing unit, according to the invention, can be activated and controlled, as to pressure and flow rate, with one hand only, with a simple gesture opening the lever up to a desired degree.

The dispensing unit for an espresso coffee machine thus conceived is susceptible of numerous modifications and variations, all of which are within the scope of the inventive concept.

Furthermore, all the details can be replaced by other technically equivalent elements.

In practice, any materials can be used according to requirements, as long as they are compatible with the specific use, the dimensions and the contingent shapes.

## Claims

1. Dispensing unit (1) for an espresso coffee machine, comprising:
- a coupling body (3) adapted to allow the coupling of a filter holder comprising a filter containing a dose of powdered coffee, said coupling body (3) being hydraulically connectable to a hot water source to allow said hot water to come into contact with said dose of powdered coffee;
- an automatic control unit (4) adapted to operate a pump configured to pump said hot water from said hot water source to said coupling body (3);
**characterised in that** it comprises:
- a regulating valve (5) of the pressure and the flow rate configured to intercept the flow of said hot water destined to reach said dose of powdered coffee;
- an activation device (9) configured to send an electric activation signal for activating said automatic control unit (4) so that said automatic control unit (4) actuates said pump;
- a lever (7) adapted to activate said regulating valve (5), said lever (7) being movable between a closed position in which said regulating valve (5) is closed, and at least one opening position in which said regulating valve (5) is at least partially open, the degree of opening of said regulating valve (5) depends on the position of said lever (7), said activation device (9) being associated with said lever (7) and being activable to send said electric activation signal for activating said automatic control unit (4).

2. Dispensing unit (1) according to claim 1, wherein said lever (7) is movable between said closed position and a maximum opening position in which said regulating valve (5) is completely open, in said maximum opening position the pressure of said hot water being directly determined by the pressure value of said pump.

3. Dispensing unit (1) according to claim 1 or 2 **characterized in that** said control valve (5) is a needle regulating valve that can be operated by said lever (7).

4. Dispensing unit (1) according to one or more of the preceding claims, **characterized in that** said regulating valve (5) comprises a valve body (58) comprising inside it a gigleur (57) and a rod (54) provided at the lower end with a regulating needle whose axial movement inside said gigleur (57) allows regulating the pressure and the flow rate of the flow of hot water intercepted by said regulating valve (5), said lever (7) engaging on the upper end of said rod (54).

5. Dispensing unit (1) according to one or more of the preceding claims, **characterized in that** said activation device (9) is associated with said lever (7) so that in said closed position of said lever (7) said activation device (9) is inactive and **in that** in said at least one open position of said lever (7) said activation device (9) is active.

6. Dispensing unit (1) according to one or more of the preceding claims, configured to be fixed to a wall (11) of an espresso coffee machine, said activation device (9) being associated with said wall (11) so as to face said lever (7) when said lever (7) is in said closed position.

7. Dispensing unit (1) according to one or more of the preceding claims, comprising a pressure gauge (12) able to detect and show the pressure of said hot water in contact with said dose of powdered coffee.

8. Dispensing unit (1) according to one or more of the preceding claims, wherein said activation device (9) comprises a switch (91) electrically connected to said automatic control unit (4).

9. Dispensing unit (1) according to claim 8, wherein, in said closed position, said lever (7) keeps said switch (91) pressed, in the passage of said lever (7) from said closed position to said at least one open position, said lever (7) releasing the pressure exerted on said switch (91) to send said electric activation signal for activating said automatic control unit (4).

10. Dispensing unit (1) according to one or more of claims 1 to 7 wherein said activation device (9) comprises a sensor (92) able to detect the passage of said lever (7) from said closed position to said at least one open position for sending said electric activation signal for activating said automatic control unit (4).

11. Espresso coffee machine comprising a hot water source, a dispensing unit (1) and a pump configured to pump said hot water from said hot water source to said dispensing unit (1), said dispensing unit (1) comprising:
- a coupling body (3) adapted to allow the coupling of a filter holder comprising a filter containing a dose of powdered coffee, said coupling body (3) being hydraulically connected to said hot water source to allow said hot water to come into contact with said dose of powdered coffee;
- an automatic control unit (4) adapted to operate said pump to pump said hot water from said hot water source to said coupling body (3) of said dispensing unit (1) ;
**characterized in that** said dispensing unit (1) comprises:
- a regulating valve (5) of the pressure and the flow rate configured to intercept the flow of said hot water destined to reach said dose of powdered coffee;
- an activation device (9) configured to send an electric activation signal for activating said automatic control unit (4) so that said automatic control unit (4) actuates said pump;
- a lever (7) associated with said regulating valve (5) and with said activation device (9), said lever (7) being movable between a closed position in which said regulating valve (5) is closed, and at least one opening position in which said regulating valve (5) is at least partially open, the degree of opening of said regulating valve (5) depends on the position of said lever (7), said activation device (9) being activable to send said electric activation signal for activating said automatic control unit (4).

12. Espresso coffee machine according to claim 11, wherein said dispensing unit (1) is a dispensing unit (1) according to one or more of claims 2 to 10.

13. Process for dispensing espresso coffee comprising the steps of:
- having an espresso coffee machine according to claim 11 or 12;
- gripping said lever (7);
- activating said activation device (9);
- moving said lever (7) from said closed position to said at least one open position to select the degree of opening of said regulating valve (5).
